# EUROPEAN PATENT APPLICATION

(11) **EP 1 640 158 A1**
(43) Date of publication of application: **29.03.2006**
(21) Application number: 05255937.4
(22) Date of filing: 23.09.2005
(51) Int. Cl.: B32B 38/04, B65D 75/58

(54) **Process for manufacturing packaging laminates and articles made therefrom**

(30) Priority: 24.09.2004 US 950065
(71) Applicant: CURWOOD, INC., Oshkosh, Wisconsin 54904 (US)
(72) Inventor: Sikorski, Kent M, Appleton, WI 54913 (US); Busche, David, Neenah, WI 54956 (US); Neely, John J, New London, WI 54961 (US); Smith, Brian C, Pulaski, WI 54162 (US); Betker, Suzanne L, Omro, WI 54964 (US)
(74) Representative: W.P. Thompson & Co.

(57) **Abstract**

The present invention includes a continuous process for manufacturing packaging laminates (30) adapted for easy tearing comprising the steps of providing a first and a second flexible web (11,12), applying a fluid adhesive (13) to the first flexible web (11), drying the fluid adhesive, or optionally, curing the fluid adhesive, slitting one of the first and second flexible webs to form a plurality of parallel strips of at least of one the first and said second webs, and laminating the first and second flexible webs (11,12) together thereby forming a laminate a plurality of parallel strips. The present invention also includes laminates form by this process.

## Description

### FIELD OF THE INVENTION

The present invention generally relates to a process for making flexible laminates for packaging applications, and particularly, to a process for manufacturing flexible packaging laminates adapted for easy tearing and laminates made therefrom.

### BACKGROUND OF THE INVENTION

Plastic films and laminates and packages made therefrom have been used for many years to protect food and non-food items from the environment. Many of these plastic films and laminates are made of superimposed layers of flexible thermoplastic material, paper, metal foil and the like. In general, the problem encountered by end users of the packages is how to open the container to gain access to items contained therein. In general, plastic films and laminates are tough and strong making them difficult to tear open manually. One method for opening such packages is simply to cut the packaging material with a scissor, knife or other sharp object. Yet, it is desirable to be able to neatly open a package without the need to use a cutting instrument. Another method to open plastic packages includes the use of zipper fasteners, tapes and the like. However, this method requires providing a fastener, accurate placement of the fastener on the package, and additional production steps making it a more costly and complicated manufacturing process. Yet another method well known to those skilled in the art is the use of score lines which provide the end user a means to rip open or dehisce the package material via a scoring of one or more layers of the packaging material.

It is also well known in the art that score lines tear may be formed mechanically, *i.e.,* for example by a cutting knife or wheel and the like, and optically, *i.e.,* for example by laser beam. In general, scoring may be formed as intermittent perforations through the entire thickness of the material or as intermittent grooves or a continuous groove penetrating through only a portion of the entire thickness of the material. However, perforations through the entire thickness of the material may be unsuitable for some packaging applications because they allow product-environment exchanges which defeat a purpose of using multiple layers of different materials, *i.e.,* for example, to protect an interiorly contained product by combining gas barrier properties of one material in one layer with moisture barrier properties of another material in another layer. Scoring through only a portion of the entire thickness of the material, either intermittently or continuously, requires the use of specialized equipment to control the depth of penetration, and therefore, leads to increased complexity and manufacturing costs.

Thus, despite the difficulties associated with producing a score line which does not penetrate through the entire thickness of a material as a means to open a package, the need exists for providing flexible thermoplastic films which are easily opened by score line and which are suitable for most packaging applications.

### SUMMARY OF THE INVENTION

Accordingly, the present invention has been developed to overcome the shortcomings of existing methods of making scored flexible thermoplastic films for packaging applications. It is therefore an object of the present invention to provide a continuous process of making packaging laminates adapted for easy tearing comprising the steps of providing a flexible first web having a first surface and an opposing second surface, applying a fluid adhesive to the first flexible web, drying the fluid adhesive on the first flexible web, providing a second flexible web having a first surface and an opposing second surface, slitting at least one of the first and second flexible webs to provide at least one continuous longitudinal slit, and laminating the first flexible web to the second flexible web such that the fluid adhesive is disposed between the first surface of the first flexible web and first surface of the second flexible web.

Thus, in accordance with one aspect of the present invention, the shortcomings of existing methods for making scored packaging films are overcome by providing a first flexible web having a first surface and an opposing second surface, and at least 50% by weight non-cellulosic content selected from the group consisting of metals, non-cellulosic polymers and combinations thereof. Preferably, the first flexible web has a Gurley Hill porosity value of at least 23 sec./100 cm as measured in accordance with ISO 5636-5 test method. More preferably, the first flexible web may include a ceramic, metal or metal oxide in a variety of forms such as a foil and/or sheet and a coated plastic substrate. Most preferably, the metal or metal oxide according to the present invention may comprise a material selected from the group consisting of aluminum, zinc, nickel, copper, bronze, silver and alloys thereof. More preferably still, the first flexible web may comprise any first non-cellulosic polymer which includes natural and synthetic materials such as, but not limited to, polyamides, polyolefins, and polyester, in a variety of forms such as sheets, films, coatings, fibers, filaments, *i.e.,* for example, monofilament yam, staple, or tow. Most preferably, the non-cellulosic polymer of the present invention comprises a material selected from the group consisting of polyamide, polyolefin, polyester, and blends thereof. Preferably, the non-cellulosic polymer oriented, more preferably, the non-cellulosic polymer is either a uniaxially or biaxially oriented.

Accordingly, another aspect of the present invention is to apply a fluid adhesive to the first flexible web. The fluid adhesive of the present invention may be applied to at least a portion of at least one surface of the first flexible web by any convenient method such as, for example, roll coating, wire-wound rod coating, slot die coating, gravure coating, knife coating, hot melt coating, or curtain coating, and allowed to dry to form a dry adhesive layer on a coated portion of the first surface of the first flexible web. The fluid adhesive may also be applied as a continuous coating or a discontinuous coating on the first surface of the first flexible web. Suitable fluid adhesives of the present invention are materials that are initially fluid or semi-fluid when placed on a substrate and becomes solid by solvent evaporation or chemical reaction. Fluid adhesives may include a variety of adhesive compositions, including, but not limited to, pressure sensitive adhesives, construction adhesives, contact adhesives, hot melts, solvent-based adhesives, and solvent-free adhesives. Fluid adhesives may also include suspensions, dispersions, emulsions, solutions and the like. Preferably, the fluid adhesive comprises a solvent-based adhesive or a solvent-free adhesive.

Still another aspect of the present invention is to dry the fluid adhesive after applying the adhesive to the first surface of the first flexible web. Drying a solvent-based fluid adhesive may comprise the use of in-line drying, off-line drying or a combination of both, and may be accomplished by application of heat and/or airflow to the adhesive. Heat and/or airflow may involve the use of any conventional drying equipment which includes, but is not limited to, drying ovens including air dryers, infrared radiation (IR) dryers, hot roll dryers and the like.. Typical drying times for the adhesive will vary depending on the particular type of adhesive and the solvent and/or diluent used, and the amounts of volatile material present. Alternatively, a solvent-free fluid adhesive may be cured in place of dried. Curing may be accomplished by use of electron beam (EB) generating units or ultraviolet (UV) lamps.

Accordingly, yet another aspect of the present invention is to provide a second flexible web having a first surface and a second surface, and at least 50% by weight non-cellulosic content selected from the group consisting of metals, non-cellulosic polymers and combinations thereof. Preferably, the second flexible web has a Gurley Hill porosity value of at least 23 sec./100 cm as measured in accordance with ISO 5636-5 test method. More preferably, the second flexible web may include a metal or metal oxide in a variety of forms such as a metal foil or sheet and a metallic coating. Most preferably, the metal or metal oxide according to the present invention may comprise a material selected from the group consisting of aluminum, zinc, nickel, copper, bronze, silver and alloys thereof. More preferably still, the first flexible web may comprise any non-cellulosic polymer which includes natural and synthetic materials such as, but not limited to, polyamides, polyolefins, and polyester, in a variety of forms such as sheets, films, coatings, fibers, filaments, *i.e.,* for example, monofilament yam, staple, or tow. Most preferably, the non-cellulosic polymer of the present invention comprises a material selected from the group consisting of polyamide, polyolefin, oriented polyolefin, polyester, oriented polyester, and blends thereof. Preferably, the oriented polyolefin comprises either a uniaxially or biaxially oriented polypropylene, and the oriented polyester comprises either a uniaxially or biaxially oriented polyethylene terephthalate.

In accordance with still yet another aspect of the present invention the shortcomings of existing methods for making scored packaging films are overcome by slitting at least one of the first and second flexible webs to provide at least one continuous longitudinal slit. Formation of at least one continuous longitudinal slit may be accomplished by various methods known to those skilled in the art. These methods are disclosed in U.S. Patent Nos. 3,626,143; 3,909,582; 4,778,058; 4,834,245; 5,001,325; 5,613,779; 5,630,308; and 6,427,420, which are hereby incorporated by reference. The methods disclosed in the aforementioned documents include, for example, forming cuts and slits with a laser, or by cutting devices or blades. It will be appreciated that at least one continuous longitudinal slit may be provided having a predetermined width and may be positioned transversely across the width of at least one of the first flexible web and the second flexible web at any location. Preferably, the slitting step comprises cutting through the entire thickness of at least one of the first or second flexible webs. It is understood that the that at least one continuous longitudinal slit provides a means for tearing, ripping or rupturing the packaging laminate in a direction coincident with the direction of the slit. Preferably, slitting comprises using at least one cutting implement to provide at least one continuous longitudinal slit. Preferably, the slitting step comprises using a plurality of cutting devices to form a plurality of parallel longitudinal slits.

Accordingly, yet still another aspect of the present invention is to laminate the first flexible web to the second flexible web such that the fluid adhesive is disposed between the first surface of the first flexible web and the first surface of the second flexible web. Lamination may be accomplished by any conventional method known by those skilled in the art which includes, but is not limited to, dry-bond lamination, thermal or pressure lamination, adhesive lamination and combinations thereof. In general, after the adhesive is dried (or cured) on the first flexible web, the first flexible web is combined with the second flexible web in a heated pressure nip. It is understood that actual heat and pressure are variables which depend upon web materials, adhesive and equipment used and are not limited to any specific values. Preferably, the lamination step includes adhesively adhering a plurality of parallel strips of either the first flexible web or the second flexible web. Preferably, the plurality of parallel strips are separated by a predetermined distance of between 0-5 mm (millimeters), more preferably, 0-2 mm, and most preferably, 0-1 mm.

It is another object of the present invention is to provide a continuous process which forms laminates adapted for easy tearing that are suitable for packaging food and non-food items.

### BRIEF DESCRIPTION OF THE DRAWINGS

**FIG. 1** is a diagrammatic perspective view of one preferred embodiment of a continuous process for making packaging laminates adapted for easy tearing according to the present invention.

**FIG. 2** is a diagrammatic perspective view of another preferred embodiment of a continuous process for making packaging laminates adapted for easy tearing according to the present invention.

**FIG. 3** is a cross-sectional view through one embodiment of a preferred laminate according to the present invention.

### DETAILED DESCRIPTION OF THE INVENTION

As used herein, the phrase "continuous process" refers to a method for preparing a laminate where continuous webs of material are unwound from rolls and feed through various manufacturing equipment to form a continuous laminate which is rewound onto another roll.

As used herein, the term "flexible" refers to a film, substrate and/or laminate that is capable of deformation without catastrophic failure.

As used herein, the term "laminate" and the phrase "film laminate" refer to the resulting product made by bonding together two or more substrates, layers or other materials such that the entire surface of one substrate or layer is in direct contact with the entire surface of another substrate or layer. The process of lamination can be accomplished by joining layers or substrates with adhesives, joining with heat and pressure, and even spread coating and extrusion coating. Conventional lamination methods used in flexible packaging are discussed in detail in Bowler, John F., "Guide to Laminations" in Modern Packaging Encyclopedia , Volume 42, Number 7A, McGraw-Hill, page 186, (1969), which is hereby incorporated by reference thereto, in its entirety.

As used herein, the term "web" refers to fibrous and non-fibrous sheets, films, and the like of thermoplastic or non-thermoplastic material used in the production of flexible feedstock materials.

As used herein, the phrase "thermoplastic" refers to a polymer or polymer mixture that softens when exposed to heat and returns to its original condition when cooled to room temperature. In general, thermoplastic materials include, but are not limited to, synthetic polymers such as polyamides, polyolefins, polyalkyl acrylates, polyesters, ethylene/vinyl alcohol copolymers, and the like. Thermoplastic materials may also include any synthetic or natural polymers that undergo cross-linking by either radiation, chemical reaction, and/or heat at any time during the manufacturing process.

As used herein, the term "polymer" refers to the product of a polymerization reaction, and is inclusive of homopolymers, copolymers, terpolymers, etc. In general, the layers of a film or film substrate can consist essentially of a single polymer, or can have still additional polymers together therewith, *i.e.*, blended therewith.

As used herein, the term "copolymer" refers to polymers formed by the polymerization of reaction of at least two different monomers. For example, the term "copolymer" includes the co-polymerization reaction product of ethylene and an α-olefin, such as 1-hexene. The term "copolymer" is also inclusive of, for example, the co-polymerization of a mixture of ethylene, propylene, 1-butene, 1-hexene, and 1-octene. As used herein, a copolymer identified in terms of a plurality of monomers, e.*g*., "propylene/ethylene copolymer", refers to a copolymer in which either monomer may copolymerize in a higher weight or molar percent than the other monomer or monomers. However, the first listed monomer preferably polymerizes in a higher weight percent than the second listed monomer.

As used herein, the phrase "non-cellulosic polymer" refers to any natural or synthetic polymer which does not comprise a material formed from glucose repeating units such as, for example, paper pulp, paper, or paperboard. Non-cellulosic polymers may include, but are not limited to, natural and synthetic polymers and copolymers of polyamide, polyolefin, polyester, polystyrene and combinations thereof, in a variety of forms such as sheets, films, coatings, fibers, filaments, *i.e.,* for example, monofilament yam, staple, or tow.

As used herein, the phrase "Gurley Hill porosity" refers to the measurement of how long it takes for a volume of gas to pass through an area of material wherein a certain pressure gradient exists. Gurley Hill porosity is measured in accordance with ISO 5636-5 test method, entitled "Paper and Board-Determination of Air Permeance and Air Resistance (Medium Range)-Part 5", which is incorporated herein by reference. This test measures the time of which 100 cubic centimeters of air is pushed through a one inch diameter sample under a pressure of approximately 4.9 inches of water using a Lorentzen & Wettre Model 121D Densometer. The result is expressed in seconds and is usually referred to as Gurley Seconds. In general, Gurley Hill porosity is a measure of the barrier strength of a material for gaseous materials where lower values mean the material is more porous. The Gurley Hill porosity value for a typical packaging material will be at least 21 seconds as compared with the Gurley Hill porosity value for paper or paperboard material which is between 10-20 seconds.

As used herein, terminology employing a "/" with respect to the chemical identity of a copolymer (e.g., polyvinylidene chloride/methyl acrylate copolymer), identifies the comonomers which are copolymerized to produce the copolymer.

As used herein, the phrase "fluid adhesive" refers to any substance, inorganic or organic, natural or synthetic, that tends to flow under pressure and/or heat at a rate sufficient of coat a web in a commercial process. Suitable fluid adhesives may have a wide range of viscosities at room temperature and may have a variety of forms, which include, but are not limited to, for example, solutions, dispersions, emulsions, pastes, mastics, and the like. Fluid adhesives are capable of adhering one substance, *i.e.,* film substrates, layers and the like, to another substance by surface bonding or attachment. Suitable organic adhesives may include natural adhesives, *i.e.,* for example, hide and bone glue, fish glue, rubber latex, terpene resins, and mucilages, and synthetic adhesives, which include, but are not limited to polyvinyl acetate emulsions, ethylene/vinyl acetate copolymers, polyurethanes, silicone polymers, cyanoacrylates, epoxy, isocyanates and the like.

As used herein, the phrase "solvent-based adhesive" refers to an adhesive system which comprises an adhesive and at least one solvent and requires that the solvent be removed by evaporation (drying) after the solvent-based adhesive is applied to at least one film substrate, layer and the like. A solvent-based adhesive may include a solvent such as conventional petrochemical-based solvents, *i.e.,* for example, but not limited to, alcohols, toluenes, esters, and the like, a water-based solvent, and combinations thereof.

As used herein, the phrase "solvent-free adhesive" refers to an adhesive system which comprises an adhesive and may include a solvent, but does not require that the solvent be removed by evaporation after the solvent-free adhesive is applied to a film substrate, layer and the like. A solvent-free adhesive may also comprise a solvent-free adhesive which is diluted with a conventional petrochemical-based or water-based solvent prior to coating in order to facilitate its application. Solvent-free adhesives may further comprise radiation-curable adhesives which polymerize and/or cross-link when exposed to ultraviolet light or ionizing radiation sources. Useful types of ionizing radiation sources include electron beam (e-beam), X-ray, corona discharge, and the like, with the former being preferred. Suitable radiation-curable adhesives are well known such as those described in, for example, U.S. Pat. Nos. 4,256,828; 4,593,051; 5,328,940; 6,617,031; 6,472,056; and U.S. Pat. Application No. 2003/0161976, which are incorporated herein by reference.

As used herein, the term "curable" refers to polymeric material which are capable of being polymerized and/or crosslinked.

As used herein, the term "drying" refers to substantial removal of the solvent or solvent mixtures from the adhesive.

As used herein, the phrase "core layer" refers to any internal film layer which has the primary function other than serving as an adhesive or compatibilizer for adhering two layers to one another.

As used herein, the phrase "internal layer" refers to any layer of a multilayer film having both principal surfaces directly adhered to another layer of the film.

As used herein, the phrase "outer layer" refers to any layer of a multilayer film having only one of its principal surfaces directly adhered to another layer of the film.

As used herein, the phrase "tie layer" refers to an internal web layer having the primary purpose of providing interlayer adhesion to adjacent layers that include otherwise nonadhering polymeric compositions. Tie layers can comprise any polymer having a polar group grafted thereon, so that the polymer is capable of ionic and/or hydrogen bonding to polar polymers such as polyamide and ethylene/vinyl alcohol copolymers.

As used herein, the term "adhered" is used in its broad sense to mean two formerly separate portions of a single laminate or one or two layers of a substrate which are connected together either by folding the laminate or layer onto its self thereby defining an edge or by bonding two layers together (presumably, their entire planar surfaces) with an adhesive or by other means known to those skilled in the art.

As used herein, the term "oriented" refers to a thermoplastic web which forms a film structure in which the web has been elongated in either one direction ("uniaxial") or two directions ("biaxial") at elevated temperatures followed by being "set" in the elongated configuration by cooling the material while substantially retaining the elongated dimensions. This combination of elongation at elevated temperature followed by cooling causes an alignment of the polymer chains to a more parallel configuration, thereby improving the mechanical properties of the polymer web. Upon subsequently heating of certain unrestrained, unannealed, oriented sheet of polymer to its orientation temperature, heat-shrinkage may be produced. Following orientation, the oriented polymer web is preferably cooled and then heated to an elevated temperature, most preferably to an elevated temperature which is above the glass transition temperature and below the crystalline melting point of the polymer. This reheating step, which may be referred to as annealing or heat setting, is performed in order to provide a polymer web of uniform flat width. In accordance with the present invention, the uniaxially- or biaxially-oriented polymer web may be used to form a substrate layer and is heated to an elevated temperature in order to provide a laminate substrate with an unrestrained linear thermal shrinkage in the machine direction of between 0-10 %, and preferably, 0-5% at 85° C. as measured in accordance with ASTM D-2732-96 test method, which is incorporated herein by reference.

As used herein, the term "polyolefin" refers to homopolymers, copolymers, including e.g. bipolymers, terpolymers, etc., having a methylene linkage between monomer units which may be formed by any method known to those skill in the art. Examples of polyolefins include polyethylene (PE), low-density polyethylene (LDPE), linear low-density polyethylene (LLDPE), very low-density polyethylene (VLDPE), ultra low-density polyethylene (ULDPE), medium-density polyethylene (MDPE), high-density polyethylene (HDPE), ultra high-density polyethylene (UHDPE), ethylene/propylene copolymers, polypropylene (PP), propylene/ethylene copolymer, polyisoprene, polybutylene, polybutene, poly-3-methylbutene-1, poly-4-methylpentene-1, ionomers, polyethylenes comprising ethylene/α-olefin which are copolymers of ethylene with one or more α-olefins (alpha-olefins) such as butene-1, hexene-1, octene-1, or the like as a comonomer, and the like.

As used herein, the term "polyester" refers to homopolymers or copolymers having an ester linkage between monomer units which may be formed, for example, by condensation polymerization reactions between a dicarboxylic acid and a glycol. The ester monomer unit can be represented by the general formula: [RCO₂R'] where R and R' = alkyl group. The dicarboxylic acid may be linear or aliphatic, *i.e.,* oxalic acid, malonic acid, succinic acid, glutaric acid, adipic acid, pimelic acid, suberic acid, azelaic acid, sebacic acid, and the like; or may be aromatic or alkyl substituted aromatic, *i.e..* various isomers of phthalic acid, such as paraphthalic acid (or terephthalic acid), isophthalic acid and naphthalic acid. Specific examples of alkyl substituted aromatic acids include the various isomers of dimethylphthalic acid, such as dimethylisophthalic acid, dimethylorthophthalic acid, dimethylterephthalic acid, the various isomers of diethylphthalic acid, such as diethylisophthalic acid, diethylorthophthalic acid, the various isomers of dimethylnaphthalic acid, such as 2,6-dimethylnaphthalic acid and 2,5-dimethylnaphthalic acid, and the various isomers of diethylnaphthalic acid. The glycols may be straight-chained or branched. Specific examples include ethylene glycol, propylene glycol, trimethylene glycol, 1,4-butane diol, neopentyl glycol and the like.

As used herein, the term "polyamide" refers to homopolymers, copolymers, or terpolymers having an amide linkage between monomer units which may be formed by any method known to those skill in the art. The nylon monomer can be presented by the general formula: [CONH] or [CONR] where R = alkyl group. Useful polyamide homopolymers include nylon 6 (polycaprolactam), nylon 11 (polyundecanolactam), nylon 12 (polylauryllactam), and the like. Other useful polyamide homopolymers also include nylon 4,2 (polytetramethylene ethylenediamide), nylon 4,6 (polytetramethylene adipamide), nylon 6,6 (polyhexamethylene adipamide), nylon 6,9 (polyhexamethylene azelamide), nylon 6,10 (polyhexamethylene sebacamide), nylon 6,12 (polyhexamethylene dodecanediamide), nylon 7,7 (polyheptamethylene pimelamide), nylon 8,8 (polyoctamethylene suberamide), nylon 9,9 (polynonamethylene azelamide), nylon 10,9 (polydecamethylene azelamide), nylon 12,12 (polydodecamethylene dodecanediamide), and the like. Useful polyamide copolymers include nylon 6,6/6 copolymer (polyhexamethylene adipamide/caprolactam copolymer), nylon 6/6,6 copolymer (polycaprolactam/hexamethylene adipamide copolymer), nylon 6,2/6,2 copolymer (polyhexamethylene ethylenediamide/hexamethylene ethylenediamide copolymer), nylon 6,6/6,9/6 copolymer (polyhexamethylene adipamide/hexamethylene azelaiamide/caprolactam copolymer), as well as other nylons which are not particularly delineated here.

As used herein, the term "polystyrene" refers to homopolymers and copolymers having at least one styrene monomer linkage within the repeating backbone of the polymer. The styrene linkage can be represented by the general formula: [(C₆R₅)CH₂CH₂] where R = H or an alkyl group. Polystyrene may be formed by any method known to those skill in the art. Suitable polystyrene includes polystyrene (PS), oriented polystyrene (OPS), high impact polystyrene (HIPS), syndiotactic polystyrene (SPS), acrylonitrile-butadiene-styrene (ABS), styrene-acrylonitrile (SAN), ethylene/styrene copolymers, styrene/acrylic copolymers, styrene block copolymers (SBC), and the like.

Unless otherwise noted, the resins utilized in the present invention are generally commercially available in sheet, film or pellet form and, as generally recognized in the art, in pellet form, may be melt blended or mechanically mixed by well-known methods using commercially available equipment including tumblers, mixers or blenders. Also, if desired, well known additives such as processing aids, slip agents, anti-blocking agents and pigments, and mixtures thereof may be incorporated into the film, by blending prior to extrusion.

The following examples illustrate the process of making the laminates and materials used to make the laminates of the present invention with reference to the accompanying drawings. In light of these examples and this further detailed description, it is apparent to a person of ordinary skill in the art that variations thereof may be made without departing from the scope of this invention.

### EXAMPLES

### Example 1

A first web of a clear biaxially oriented, 75 gauge polyethylene terephthalate (OPET) film is loaded onto a primary unwind position. The OPET has a tensile strength of 460 kpsi (MD) and 490 kpsi (TD), an elongation at break of 170% (MD) and 140% (TD), a haze value of 6.0% and sold under the trademark Mylar® P25T, available from DuPont Teijin Films., Hopewell, VA, U.S.A. The first web is fed through a gravure station where an adhesive is applied to a first surface of the web. The first surface of the first web is coated with a mixture of 50% by weight of an urethane-based adhesive in an ethanol solvent. Using a mixing ratio of 100:12 (first component:second component), the urethane-based adhesive comprises 90% by weight of a first component having 70% solids (initial), a viscosity of between 3,500-6,000 centipoise (initial), and a density of 0.97 g/cm³ and 10% by weight of a second component having 83% solids (initial), a viscosity of between 55-75 centipoise (initial), a density of 1.09 g/cm³, and sold under the trademark Avadyne™ AV5210 which is available from Sovereign Specialty Chemicals, Inc., Buffalo, NY, U.S.A. The coated first web is then dried by passing through a heated forced air drying oven. A web temperature of about 65° C. is attained to adequately dry the adhesive. The coated first web then enters a slitting station where slitting knives are located to slit the adhesive-coated OPET web into a plurality of parallel strips. A second web is provided from a secondary unwind roll. The second web is a film having a core layer of ethylene/vinyl alcohol copolymer (E/VOH), an internal layer of polyamide (PA) positioned on either side of the core layer, and two outer layers of low-density polyethylene (LDPE). It will be appreciated that one or more tie layers can be used in the above structure. It is noted that various combinations of layers can be used in the formation of the first and second webs. Only 1-through 7-layer embodiments are provided here for illustrative purposes; however, both webs according to the present invention may include more layers as desired. Accordingly, the first web as a plurality of parallel strips is then laminated to the second web by feeding the webs through nip rollers which press the webs together. The finished laminate is finally wound around the winder for storage or later use.

### Example 2

In this Example the same procedures are followed as in Example 1, except the first surface of the first web is coated with a mixture of 58.3% by weight urethane-based adhesive in an ethyl acetate solvent. Using a mixing ratio of 100:9 (first component:second component), the urethane-based adhesive comprises 53.5% by weight of a first component having 55% solids (initial), and a viscosity of 2,500 centipoise (initial), and 4.8% by weight of a second component having 75% solids (initial), and a viscosity of 1200 centipoise (initial), and sold under the trademark Adcote™ 812/Adcote™ 811B which is available from Rohm and Haas, Elgin, IL, U.S.A.

### Example 3

In this Example the same procedures are followed as in Example 1, except the first surface of the first web is coated with a radiation-curable solvent-free adhesive having a viscosity of between 1800-2000 centipoise (initial), such as EBA101V available from Sovereign Specialty Chemicals, Inc., Buffalo, NY, U.S.A. The first web is then passed through a curing station where the adhesive is exposed to an electron beam to cure the adhesive. The coated first web then enters a slitting station where slitting knives are located to slit the adhesive-coated OPET web into a plurality of parallel strips, followed by lamination with a second flexible web.

### Example 4

In this Example the same procedures are followed as in Example 1, except the material used for the first web is a biaxially oriented, 60 gauge polyamide film having a tensile strength of 33,000 psi (MD), a haze value of 3%, and an impact strength of 1.25 lb-ft, which is available from AlliedSignal Specialty Films, Pottsville, PA, U.S.A.

### Example 5

In this Example the same procedures are followed as in Example 1, except the material used for the first web is an oriented, 60 gauge polypropylene film having a tensile strength of 19,000 psi (MD) and 38,000 (TD), a haze value of 2%, and is sold under the trademark Bicor® SLR, which is available from ExxonMobil Chemical, Houston, TX, U.S.A. Prior to the application of an adhesive, the polypropylene film is first surface-treated by either corona discharge or flame treatment.

### Example 6

In this Example the same procedures are followed as in Example 1, except the material used for the first web is a biaxially oriented, 48 gauge polyethylene terephthalate (OPET) film having a metallized first surface, a tensile strength of 34000 psi (MD) and 37000 psi (TD), an elongation at break of 140% (MD) and 120% (TD), a haze value of 4.0% and sold under the trademark Skyrol® SP93C, available from SKC, Inc., Covington, GA, U.S.A.

### Example 7

In this Example the same procedures are followed as in Example 1, except the material used for the second web is a barrier film having a core layer of ethylene/vinyl alcohol copolymer (E/VOH) and two outer layer of low-density polyethylene (LDPE) disposed on either side of the core layer.

### Example 8

In this Example the same procedures are followed as in Example 1, except the material used for the second web is a barrier film having a core layer of ethylene/vinyl alcohol copolymer (E/VOH), a first internal layer of ultra low-density polyethylene (ULDPE) positioned on one side of the core layer and a second internal layer of a blend of 82% by weight of ethylene/vinyl acetate copolymer (E/VA) and 18% by weight of polybutene-1 (PB) positioned on other side of the core layer, and a first outer layer of ultra low-density polyethylene (ULDPE) and a second outer layer of ethylene/vinyl acetate copolymer (E/VA).

Attention is now directed to the present invention which will be described hereunder in detail with reference to the accompanying drawings mentioned above, wherein like numerals represent like parts throughout the several views.

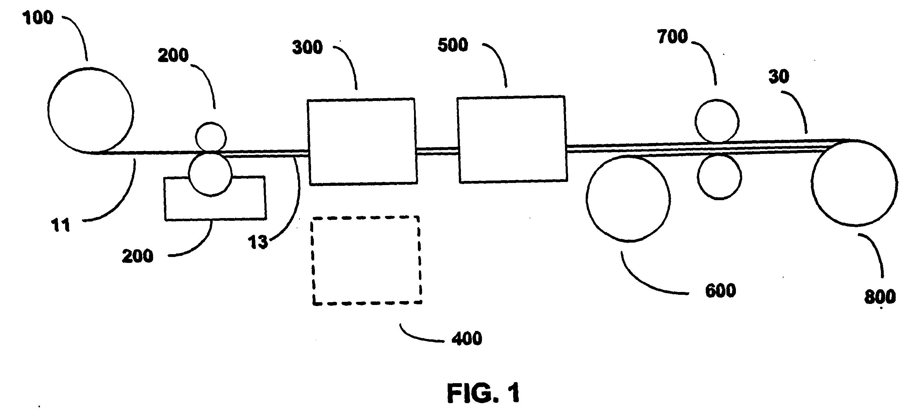

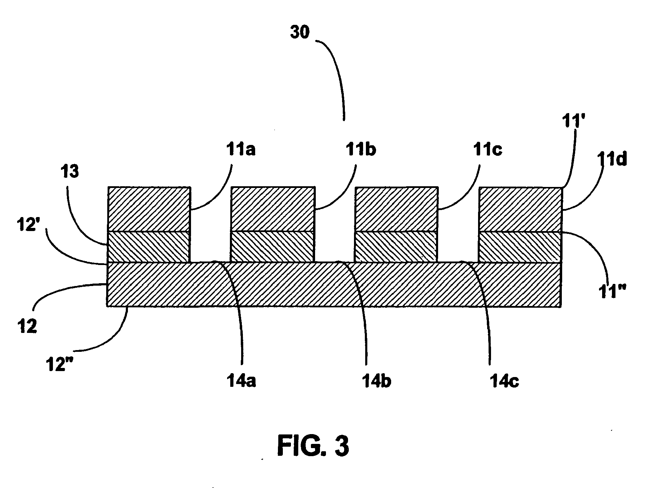

FIG.1 represents a diagrammatic perspective view of one embodiment of a preferred continuous process for making packaging laminates adapted for easy tearing according to the present invention. The process line progresses from left to right so that the final laminate, such as, for example, laminate 30 as illustrated in FIG. 3, is at the right side of the figure. Starting at the left-hand side of FIG. 1, a first web 11 having a first surface 11' (See FIG. 3), and an opposing second surface 11" (See FIG. 3) is dispensed from primary unwind roll 100. First web 11 then enters coating station 200 where a solvent-based adhesive is applied to first surface 11' of first web 11 and passes under a drying station 300 where the solvent is removed from the adhesive 13. Alternatively, when a solvent-free adhesive is used in place of a solvent-based adhesive, a drying station 300 is not used and first web 11 passes under a curing station 400 where it is exposed to either ultraviolet (UV) and/or electron beam (EB) radiation. After leaving drying station **300** (or curing station **400**), first web **11** enters slitting station **500** where cutting blades slice first web 11 to form a plurality of parallel longitudinal slits. It will be appreciated by those skilled in the art that the slitting operation is not limited to any particular slitting/cutting method, the number of slitting/cutting devices used, nor number of parallel longitudinal slits formed. The second web 12 having a first surface 12' (See FIG. 3) and a second surface **12"** (See FIG. 3) was provided from secondary unwind roll **600**. First web **11** and second web **12** were pressed together in laminating nip **700** such that the first surface **11a** of first web **11** and the first surface **12a** of second web **12** are in contact with adhesive **13.** Finally, the laminate **30** is rewound onto winder **800** for storage or later use.

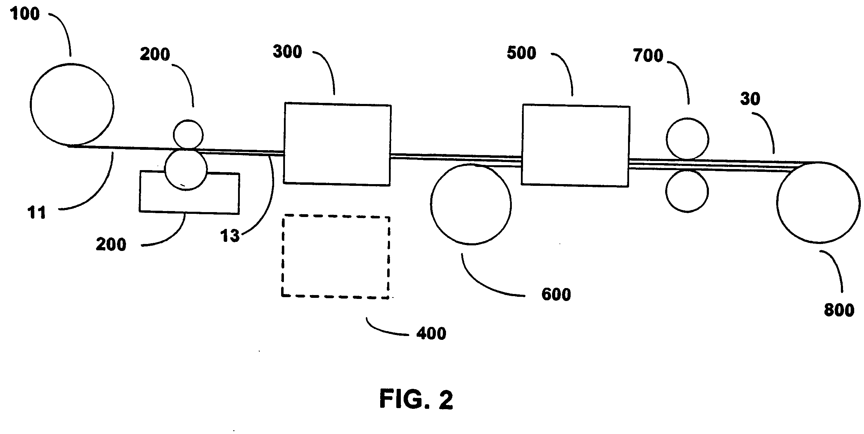

Referring now to FIG. 2, another embodiment is shown of a continuous process for making packaging laminates adapted for easy tearing according to the present invention. The process depicted is identical to that described for FIG. 1, except that first web 11 is not slit, but second web 12 enters slitting station 500 where second web 12 is slit to form a plurality of parallel longitudinal slits. Second web 12 then is pressed together with first web 11 in laminating nip 700 to form laminate 30 which is rewound onto winder 800.

FIG. 3 is a cross-sectional view through one embodiment of a preferred laminate according to the present invention. Depicted is a partial segment of laminate 30 comprising a plurality of parallel strips **11a-d** of first web **11,** adhesive **13,** second web **12,** and a plurality of continuous, uninterrupted longitudinal channels **14a-c**.

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the invention.

Unless otherwise noted, the physical properties and performance characteristics reported herein were measured by test procedures similar to the following methods. The ASTM test procedures are hereby incorporated herein by reference.

Density ASTM D-1505

Impact Strength ASTM D-256

Haze ASTM D-1003

Percent Elongation at Break ASTM D-882

Tensile Strength ASTM D-882

Viscosity of Adhesives ASTM D-1084

Gurley Hill Porosity ISO 5636-5

Many modifications and other embodiments of the invention will come to mind to one skilled in the art to which this invention pertains having the benefit of the teachings presented in the foregoing descriptions and the associated drawings. Therefore, it is to be understood that the invention is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A continuous process for making a packaging laminate adapted for easy tearing comprising:
(a) providing a first flexible web having a first surface and an opposing second surface, and at least 50% by weight non-cellulosic content selected from metals, ceramics, non-cellulosic polymers or combinations thereof; wherein said first flexible web has a Gurley Hill porosity value of at least 23 sec./100cm as measured in accordance with ISO 5636-5 test method;
(b) applying a fluid adhesive to said first surface of said first web;
(c) drying or curing said fluid adhesive on said first flexible web;
(d) providing a second flexible web having a first surface and an opposing second surface, and at least 50% by weight non-cellulosic content selected from metals, ceramics, non-cellulosic polymers or combinations thereof; wherein said second flexible web has a Gurley Hill porosity value of at least 23 sec./100cm as measured in accordance with ISO 5636-5 test method;
(e) slitting at least one of said first and said second flexible webs to provide at least one continuous longitudinal slit; and
(f) laminating said first flexible web to said second flexible web such that said fluid adhesive is disposed between said first surface of said first flexible web and said first surface of said second flexible web.

2. A continuous process for making a packaging laminate adapted for easy tearing as claimed in Claim 1, wherein said slitting comprises cutting through the entire thickness of at least one of said first and said second flexible webs.

3. A continuous process for making a packaging laminate adapted for easy tearing as claimed in claim 1 or claim 2, wherein said slitting comprises using a plurality of cutting devices.

4. A continuous process for making a packaging laminate adapted for easy tearing as claimed in any preceding claim, wherein said laminating comprises adhesively laminating a plurality of parallel strips of either said first flexible web or said second flexible web.

5. A continuous process for making a packaging laminate adapted for easy tearing as claimed in Claim 4, wherein said plurality of parallel strips are separated by a predetermined distance of between 0-5mm.

6. A continuous process for making a packaging laminate adapted for easy tearing as claimed in Claim 5, wherein said plurality of parallel strips are separated by a predetermined distance of between 0-2.0mm.

7. A continuous process for making a packaging laminate adapted for easy tearing as claimed in Claim 6, wherein said plurality of parallel strips are separated by a predetermined distance of between 0-1.0mm.

8. A continuous process for making a packaging laminate adapted for easy tearing as claimed in any preceding claim, wherein said metal comprises a material selected from elemental metals, metal oxides, metal alloys or combinations thereof.

9. A continuous process for making a packaging laminate adapted for easy tearing as claimed in any preceding claim, wherein said metal and said ceramic both comprise either a foil or a coating.

10. A continuous process for making a packaging laminate adapted for easy , tearing as claimed in Claim 9, wherein said metal foil comprises a material selected from aluminium, zinc, nickel, copper, bronze or silver.

11. A continuous process for making a packaging laminate adapted for easy tearing as claimed in any preceding claim, wherein said non-cellulosic polymers comprise a material selected from polyamide, polyolefin, polyester, polystyrene, oriented polyamide, oriented polyolefin, oriented polyester, oriented polystyrene or blends thereof.

12. A continuous process for making a packaging laminate adapted for easy tearing as claimed in any preceding claim, wherein said fluid adhesive comprises either a solvent-based adhesive or solvent-free adhesive.

13. A continuous process for making a packaging laminate adapted for easy tearing as claimed in claim 12, wherein said solvent-based or said solvent-free adhesive comprises a polyurethane adhesive.

14. A continuous process for making a packaging laminate adapted for easy tearing as claimed in any preceding claim, wherein said process further comprises forming a laminate suitable for packaging food or non-food items therein.
